# EUROPÄISCHE PATENTSCHRIFT

(11) **EP 1 092 652 B1**
(45) Veröffentlichungstag und Bekanntmachung des Hinweises auf die Patenterteilung: **11.09.2002**
(21) Anmeldenummer: 00108594.3
(22) Anmeldetag: 20.04.2000
(51) Int. Cl.: B65D 88/28, B23Q 11/00

(54) **Vorrichtung und Verfahren zum Zwischenlagern und Transportieren von Spanmaterial**
Method and apparatus for intermediate storage and transporting of chip material
Procédé et dispositif de stockage intermédiaire et de transport de copeaux

(30) Priorität: 15.10.1999 DE 19950000
(43) Veröffentlichungstag der Anmeldung: 18.04.2001
(73) Patentinhaber: Alpirsbacher Maschinenbau GmbH & Co. KG, 72275 Alpirsbach (DE); Recon GmbH, 78652 Deisslingen (DE)
(72) Erfinder: Riegert, Wolfgang, 72275 Alprisbach (DE); Riegert, Klaus, 72275 Alpirsbach (DE); Maier, Armin, 78234 Engen (DE)
(74) Vertreter: Klocke, Peter, Dipl.-Ing.

(56) Entgegenhaltungen:
- EP-A- 0 933 313
- DE-A- 2 531 691
- DE-A- 3 537 156
- PATENT ABSTRACTS OF JAPAN vol. 016, no. 477 (M-1320), 5. Oktober 1992 (1992-10-05) -& JP 04 173589 A (TOYOTA AUTOM LOOM WORKS LTD), 22. Juni 1992 (1992-06-22)

## Beschreibung

Die vorliegende Erfindung betrifft eine Vorrichtung zum Zwischenlagem von Spanmaterial sowie ein Verfahren zum dosierten Lagern und Transportieren von Spanmaterial.

Bei der Entsorgung von Spanmaterial aus Metall oder Kunststoff, das bei spanerzeugenden Fertigungsmaschinen anfällt, wird dieses direkt oder über entsprechende Fördersysteme in Mulden gelagert. Je nach Art des Fördersystems und der Art des Spanes befinden sich im Anschluss an die spanerzeugende Fertigungsmaschine noch Einrichtungen zum Zerkleinern und/oder Trennen der Späne von einem Kühlschmierstoff. Die in den üblicherweise offenen Transportbehältern gelagerten Spanmaterialen werden mittels Fahrzeugen zu einem Schrotthändler transportiert und dort zwischengelagert, sortiert und anschließend erneut mit einem weiteren größeren Transportfahrzeug zu einem Recyclingbetrieb gebracht. Diese Handhabung hat den Nachteil, dass das Material mehrmals auf- und abgeladen wird und darüber hinaus aus Umweltschutzgründen der Aufwand beim Schrotthändler hinsichtlich der Lagerung immens ist.

Aus der JP-A-04173589 ist eine Einrichtung bekannt, bei der ein schwenkbar gelagerter nach oben offener Schüttgutsammelbehälter mit Spänen gefüllt und durch Drehung um seine Lagerachse in ein darunter befindliches Kraftfahrzeug geleert werden kann.

Der vorliegenden Erfindung liegt die Aufgabe zugrunde, eine weitere Möglichkeit zur Entsorgung des Spanmaterials vorzuschlagen, bei der auch der vorstehend erwähnte Aufwand erheblich reduziert werden kann.

Diese Aufgabe wird erfindungsgemäß durch eine Vorrichtung zum Zwischenlagern von Spanmaterial mit den Merkmalen des Hauptanspruchs gelöst. Weitere vorteilhafte Ausgestaltungen sind den Unteransprüchen zu entnehmen.

Danach weist die Vorrichtung zumindest einen Spansammelraum mit glatten Wänden und eine Querschnittsfläche in Spanbewegungsrichtung auf, die von einer Eintragsöffnung zu einer Auslassöffnung konstant ist oder sich vergrößert, zur Aufnahme von zumindest sich teilweise untereinander verhakelnden Spänen aus Kunststoff oder Metall mit einer Restfeuchte von max. 5 %.

Um ein Verstopfen der Auslassöffnung zu verhindern, ist der Spansammelraum mit glatten Wänden ausgebildet, die den Spansammelraum zur Auslassöffnung hin nicht verengen. Die Spangröße beträgt max. 40 mm, da größere Späne zu leicht zu Verstopfungen und daher zur Störung des Transportes führen können.

Die Vorrichtung weist außerdem eine obere Eintragsöffnung zum Zuführen der Späne, die entweder seitlich oder von oben in den Spansammelraum gelangen können. In dem Spansammelraum ist ein schräger Boden und eine an den schrägen Boden anschließende untere, mittels einer Verschlusseinrichtung verschließbare Auslassöffnung zum Entleeren der gelagerten Späne in ein unterhalb der Auslassöffnung sich befindendes Transportfahrzeug angeordnet. Durch die zumindest teilweise sich verhakelnden und verkantenden Materialien muss sichergestellt sein, dass ein Entleeren des Spanraumes durch einfaches Öffnen der unteren Auslassklappe und Ausschütten in ein sich darunter befindendes Fahrzeug gewährleistet ist. Dies wird durch die besondere Ausgestaltung des Spansammelraumes gewährleistet. Durch die geringe Restfeuchte des Materials wird die Rieselfähigkeit des Materials erhöht. Die Verschlusseinrichtung stellt sicher, dass der Spansammelraum dosiert je nach der Zulademöglichkeit des Transportfahrzeuges entleert werden kann und auch ein Wiederverschließen bei nur teilweise Entleerung möglich ist.

Die Verschlußeinrichtung ist als hydraulisch oder elektrisch beträtigte Klappe oder vorzugsweise aus einem, um eine Drehachse sich drehenden Drehverschluss ausgebildet, der aufgrund seines Eigengewichts den Materialfluss durch die Auslassöffnung unterbricht.

Um sicher zu stellen, dass eine Verunreinigung des Erdreiches durch eventuell trotzdem noch ablaufende Ölschmierstoffe ist unterhalb des Spansammelraumes gemäß einer besonders bevorzugten Ausführungsform eine Auffangeinrichtung zur Aufnahme und Abführung von aus dem Spansammelraum gelangenden Flüssigkeiten angeordnet. Diese Auffangeinrichtung kann später in Form einer Wanne oder auch einer Rinne im Bereich der Auslassöffnung realisiert sein, so dass beim öffnen der Auslassöffnung das Kühlschmiermittel entlang dem schrägen Boden und über die untere Öffnungskante in die untere Rinne gelangen kann. An der jeweiligen Auffangeinrichtung ist ein Abfluss angeordnet, um die eingesammelte Flüssigkeit in einen Behälter abzuführen.

Gemäß einer weiteren bevorzugten Ausbildung kann der Spansammelraum mittels Längsunterteilungen in mehrere Kammern unterteilt sein, die jeweils eine gesondert betätigbare Verschlusseinrichtung aufweisen. Dadurch wird verhindert, dass das Volumen in einem Spansammelraum für die Entleerung aufgrund der Besonderheit der Materialien zu groß wird.

Die Vorrichtung selbst kann je nach Ausbildung einen entsprechenden Stahlrahmen aufweisen, der für die ausreichende Höhe zum Unterfahren des Ansammelraumes mit einem Transportfahrzeug gewährleistet. Grundsätzlich ist es jedoch auch möglich, je nach räumlichen Gegebenheiten, die Zufahrt für das Transportfahrzeug über eine tieferliegende Mulde zu bewerkstelligen.

Durch eine geschlossene Vorrichtung mit dem Spansammelraum in Form eines Spansilos werden Verunreinigungen der Charge ausgeschlossen, so dass ein späteres Sortieren entfällt.

Die Erfindung wird außerdem durch ein Verfahren zu dosiertem Lagern und Transportieren von zumindest teilweise sich verhakelndem Spanmaterial gemäß Anspruch 6 sowie durch die Verwendung eines Schüttgutsammelbehälters gemäß Anspruch 7 gelöst.

Nachfolgend wird die Erfindung anhand von Ausführungsbeispielen näher erläutert. Es stellen dar:
Figur 1 eine perspektivische Darstellung einer Vorrichtung zum Zwischenlagern,
Figur 2 eine Schnittdarstellung durch die Vorrichtung gemäß Figur 1,
Figur 3 eine prinzipielle perspektivische Darstellung einer anderen Ausführungsform der Vorrichtung zum Zwischenlagern, und
Figur 4 eine prinzipielle Schnittdarstellung der Vorrichtung gemäß Figur 3.

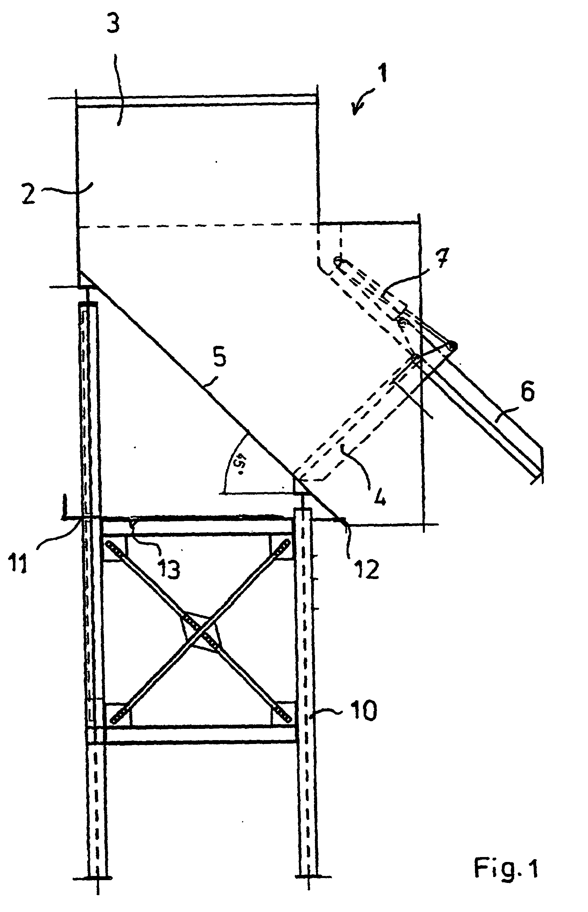

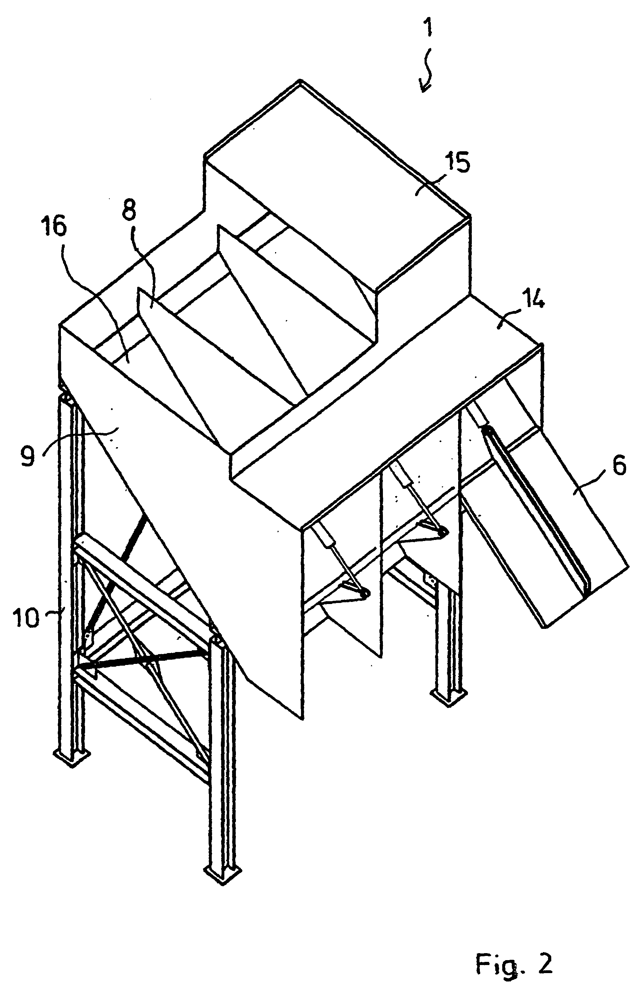

Figur 1 zeigt ein Spansilo 1 mit einem Spansammelraum 2, der eine obere Eintragsöffnung 3 und eine untere Auslassöffnung 4 aufweist. Über den schrägen Boden 5 gelangen die Späne bei geöffneter Klappe 6 in ein darunter befindliches nicht dargestelltes Transportfahrzeug. Die Klappe 6 wird mittels einer hydraulischen oder elektrischen Schließeinrichtung 7 verschlossen, wobei auch ein Verschließen bei nicht vollständig entleertem Spansammelraums 2 möglich ist. In dem Ausführungsbeispiel weist der schräge Boden 5 eine Steigung von 45 Grad auf. Damit immer ein vollständiges Entleeren des Spansammelraumes möglich ist, weist der Spansammelraum glatte, seitliche Wände 8, 9 (Figur 2) auf. In dem in der Figur 2 dargestellten Ausführungsbeispiel ist der Spansammelraum 2 durch Trennwände 8 in Kammern 16 unterteilt, um das Volumen des Spansammelraumes 2 zu begrenzen, damit ein Verstopfen aufgrund des besonderen Materials verhindert wird. Außerdem ist sichergestellt, dass der Spansammelraum 2 zumindest nach innen in Richtung Auslassöffnung 4 nicht konisch ist, da andernfalls ein vollständiges Entleeren des zwar rieselfähigen jedoch sich zumindest teilweise verhakelnden Spanmaterials nicht mehr möglich ist. Bei der in den Figuren 1 und 2 dargestellten Ausführungsform ist der Spansammelraum 2 auf einem Traggestell 10 angeordnet, das für eine ausreichende Höhe zum Unterfahren sorgt. Unterhalb des Spansammelraumes 2 befindet sich eine Auffangeinrichtung 11 zur Aufnahme eventuell vorhandener Restfeuchtigkeit aus dem Sammelraum 2. In dem Ausführungsbeispiel ist die Auffangeinrichtung 11 als Rinne ausgebildet, die die über die Schräge 5 auslaufende Flüssigkeit an der Öffnungskante 12 auffängt. Je nach Ausgestaltung kann auch mittels eines zusätzlichen Siebes in der Schräge 5 in der Nähe der Auslassöffnung 4 die über die Schräge ablaufende Restflüssigkeit in die darunter angeordnete Auffangeinrichtung 11 geleitet werden. Die Auffangeinrichtung 11 weist einen Abfluss 13 zum Entleeren in ein nicht dargestelltes Transportgefäß auf.

Die in den Figuren 1 und 2 schematisch dargestellte Vorrichtung weist einen Regenschutz 14 sowie einen Deckel 15 auf, um sicherzustellen, dass kein Regen in den Spansammelraum 2 gelangt, damit die eventuell an den Spänen anhaftende Kühlschmierflüssigkeit nicht abgewaschen und auf diese Art und Weise in das Bodenreich gelangt. Selbstverständlich kann durch entsprechende Überdachung der gesamten Anlage ebenfalls sichergestellt werden, dass ein ausreichender Schutz vor Regen gewährleistet wird.

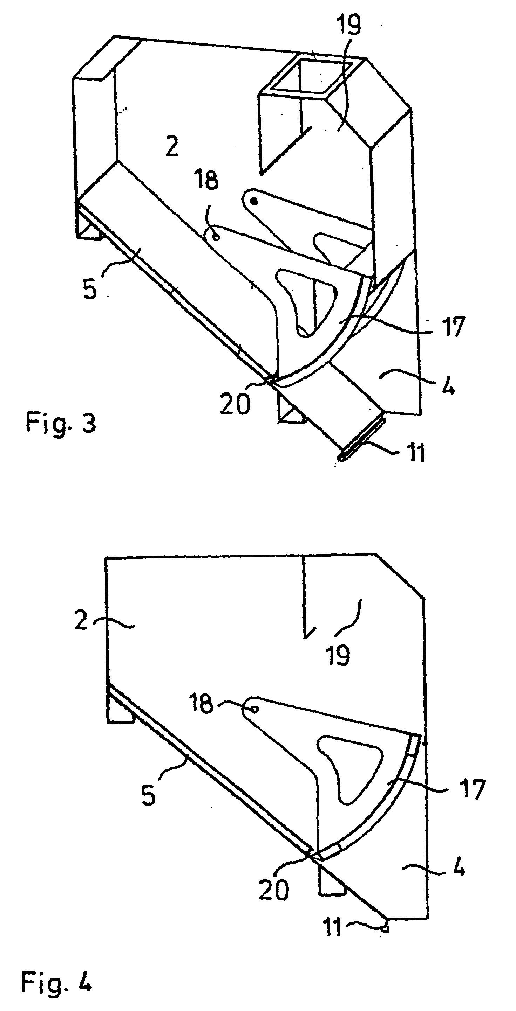

Die prinzipielle Darstellung in Figur 3 zeigt eine andere Ausgestaltung des Spansammelraums 2 mit einem Drehverschluss 17, der sich um eine Drehachse 18 dreht. Der Drehverschluss 17 wird mittels einer nicht dargestellten Seilwinde, die sich in dem mit der Bezugsziffer 19 bezeichneten Bereich befindet angehoben und abgesenkt. Der Drehverschluss 17 weist ein Eigengewicht von über 1 Tonne auf und ist damit in der Lage, den aus dem Spansammelraum 2 über die Auslassöffnung 4 austretenden Materialstrom aufzuhalten. Damit ein sicherer Verschluss gebildet wird ist der Boden 5 mit einem Absatz 20 versehen. Am Ende des Silobodens befindet sich eine Auffangeinrichtung 11 zur Aufnahme von Flüssigkeiten. Figur 4 zeigt eine prinzipielle Schnittdarstellung des Spansammelraums 2 mit Drehverschluss 17. Der Spansammelraum ist entsprechend dem Ausführungsbeispiel gemäß Figuren 1 und 2 regensicher abgedeckt, wobei auch bei dieser Ausführungsform der Spansammelraum 2 durch Trennwände 8 unterteilt und mehreren Drehverschlüssen 17 versehen sein kann.

## Patentansprüche

1. Vorrichtung zum Zwischenlagern von schüttfähigem Spanmaterial, bestehend aus zumindest einem Spansammelraum (2) mit glatten Wänden (8, 9) und einer Querschnittsfläche in Spanbewegungsrichtung, die von einer Eintragsöffnung (3) zu einer Auslassöffnung (4) konstant ist oder sich vergrößert, zur Aufnahme von zumindest teilweise sich verhakelnden Spänen aus Metall oder Kunststoff mit einer Restfeuchte von max. 5 %, einer oberen Eintragsöffnung (3) zum Zuführen der Späne, einem schrägen Boden (5) und einer unten an den schrägen Boden (5) anschließenden, mittels einer Verschlusseinrichtung (6, 7, 17) verschließbaren Auslassöffnung (4) zum Entleeren der gelagerten Späne in ein unterhalb der Auslassöffnung (4) sich befindendes Transportfahrzeug.

2. Vorrichtung nach Anspruch 1, **dadurch gekennzeichnet, dass** unterhalb des Spansammelraumes (2) eine Auffangeinrichtung (11) zur Aufnahme und Abführung von aus dem Spansammelraum (2) gelangenden Flüssigkeiten angeordnet ist.

3. Vorrichtung nach Anspruch 1 oder 2, **dadurch gekennzeichnet, dass** der Spansammelraum (2) mittels Längsunterteilung (8) in mehrere Kammern (16) unterteilt ist, die jeweils eine gesondert betätigbare Verschlusseinrichtung (6, 7, 17) aufweisen.

4. Vorrichtung nach einem der vorangegangenen Ansprüche, **dadurch gekennzeichnet, dass** die Verschlusseinrichtung aus einem, um eine Drehachse (18) sich drehenden Drehverschluss (17) besteht, der aufgrund seines Eigengewichts den Materialfluss durch die Auslassöffnung (4) unterbricht.

5. Vorrichtung nach einem der vorangegangen Ansprüche 1 - 3, **dadurch gekennzeichnet, dass** die Verschlusseinrichtung eine hydraulisch oder elektrisch betätigte und oberhalb der Auslassöffnung (4) angelengte Klappe (6) aufweist.

6. Verfahren zum dosierten Lagern und Transportieren von Spanmaterial, **gekennzeichnet durch**, Fördern von Spänen aus Metall oder Kunststoff von einer Abgabeeinrichtung in einen regensicheren Spansammelbehälter (1) gemäß einem der Ansprüche 1 - 5, zwischenlagern der Späne in dem Spansammelbehälter bis zum Erreichen einer bestimmten Füllhöhe, Austragen der Späne **durch** Schütten der Späne in ein Transportfahrzeug und Weitertransport der Späne mittels des Transportfahrzeuges.

7. Verwendung eines Schüttgutsammelbehälters gemäß einem der Ansprüche 1-5 als Sammelbehälter (2) zum Zwischenlagem von zumindest teilweise sich verhakelnden Spanmaterial aus Metall oder Kunststoff, das mittels einer Zufuhreinrichtung in den Sammelbehälter transportiert und über die Auslassöffnung in ein Fahrzeug geschüttet und weiterbefördert wird.

## Claims

1. Apparatus for the intermediate storage of pourable chip material, said apparatus comprising at least one chip collecting chamber (2), which is provided with smooth walls (8, 9) and a cross-sectional area which, when viewed with respect to the direction of the chip movement, is constant or increases from an inlet aperture (3) to an outlet aperture (4), for receiving at least partially interlocking chips formed from metal or plastics material, having a max. residual moisture of 5 %, said apparatus also comprising an upper inlet aperture (3) for the supply of the chips, an inclined base (5) and an outlet aperture (4), which communicates at the bottom with the inclined base (5) and is closable by means of a closure means (6, 7, 17), for emptying the stored chips into a transport vehicle situated beneath the outlet aperture (4).

2. Apparatus according to claim 1, **characterised in that** a catching means (11), for receiving and discharging fluids emerging from the chip collecting chamber (2), is disposed beneath the chip collecting chamber (2).

3. Apparatus according to claim 1 or 2, **characterised in that** the chip collecting chamber (2) is divided, by means of an elongate partition (8), into a plurality of chambers (16) which each have a separately actuatable closure means (6, 7, 17).

4. Apparatus according to one of the preceding claims, **characterised in that** the closure means comprises a locking closure (17), which rotates about an axis of rotation (18) and interrupts the flow of material through the outlet aperture (4) because of its inherent weight.

5. Apparatus according to one of the preceding claims 1 - 3, **characterised in that** the closure means has an hydraulically or electrically actuated flap (6), which is pivotally mounted above the outlet aperture (4).

6. Method for the dosed storage and transportation of chip material, **characterised by** conveying chips, formed from metal or plastics material, from a delivery means into a rainproof chip collecting container (1) according to one of claims 1 - 5, storing the chips intermediately in the chip collecting container until a predetermined filling level is reached, discharging the chips by pouring the chips into a transport vehicle, and transporting the chips further by means of the transport vehicle.

7. Use of a receptacle for pourable material according to one of claims 1 - 5 as a collecting container (2) for the intermediate storage of at least partially interlocking chip material formed from metal or plastics material, which chip material is transported into the collecting container by means of a feeding mechanism and being poured into a vehicle via the outlet aperture and being conveyed further.

## Revendications

1. Dispositif pour le stockage provisoire de matériaux en copeaux en vrac, composé d'au moins une chambre de recueil des copeaux (2) à parois lisses (8, 9) et d'une superficie de section dans le sens de déplacement des copeaux qui est constante ou qui s'agrandit depuis une ouverture d'alimentation (3) vers une ouverture d'évacuation (4), pour le logement de copeaux en métal ou en plastique s'accrochant au moins partiellement avec une humidité résiduelle de 5% maximum, d'une ouverture d'alimentation (3) supérieure pour l'admission des copeaux, d'un fond (5) incliné, et d'une ouverture d'évacuation (4) verrouillable au moyen d'un dispositif de fermeture (6, 7, 17), adjacente en-dessous au fond (5) incliné, pour l'évacuation des copeaux stockés dans un véhicule de transport se trouvant sous l'ouverture d'évacuation (4).

2. Dispositif selon la revendication 1, **caractérisé en ce qu'**un dispositif récepteur (11) pour l'absorption et le transport de liquides sortant de la chambre de recueil des copeaux (2) est placé en-dessous de la chambre de recueil des copeaux (2).

3. Dispositif selon la revendication 1 ou 2, **caractérisé en ce que** la chambre de recueil des copeaux (2) est subdivisée en plusieurs chambres (16) au moyen de cloisonnements longitudinaux (8), chambres qui présentent un dispositif de fermeture (6, 7, 17) pouvant être actionné séparément.

4. Dispositif selon l'une des revendications précédentes, **caractérisé en ce que** le dispositif de fermeture est constitué d'un verrouillage rotatif (17), pivotant autour d'un axe de pivotement (18), qui interrompt le flux de matériau par l'ouverture d'évacuation (4) en raison de son poids propre.

5. Dispositif selon l'une des revendications 1 à 3, **caractérisé en ce que** le dispositif de fermeture présente un volet (6) actionné hydrauliquement ou électriquement et articulé au-dessus de l'ouverture d'évacuation (4).

6. Procédé pour le stockage dosé et le transport de matériau en copeaux, **caractérisé par** convoyage de copeaux de métal ou de plastique à partir d'un dispositif de sortie dans un récipient collecteur de copeaux (1) étanche à la pluie selon l'une des revendications 1 à 5, entreposage temporaire des copeaux dans le récipient collecteur de copeaux jusqu'à atteindre une hauteur de remplissage définie, sortie des copeaux par déversement des copeaux dans un véhicule de transport et transport ultérieur des copeaux au moyen du véhicule de transport.

7. Utilisation d'un récipient collecteur de matériau en vrac selon l'une des revendications 1 à 5 comme récipient collecteur (2) pour l'entreposage temporaire de matériau en copeaux en métal ou en plastique s'accrochant entre eux au moins partiellement, qui est transporté au moyen d'un dispositif d'alimentation dans le récipient collecteur et est déversé par l'intermédiaire de l'ouverture d'évacuation dans un véhicule et transporté ailleurs.
